# EUROPÄISCHE PATENTANMELDUNG

(11) **EP 0 849 966 A2**
(43) Veröffentlichungstag der Anmeldung: **24.06.1998**
(21) Anmeldenummer: 97440116.8
(22) Anmeldetag: 25.11.1997
(51) Int. Cl.: H04Q 7/34, H04Q 7/22

(54) **Testsender, Verfahren und Rechner zum Testen eines zellularen Mobilfunknetzes**

(30) Priorität: 25.11.1996 DE 19648543
(71) Anmelder: ALCATEL ALSTHOM COMPAGNIE GENERALE D'ELECTRICITE, 75008 Paris (FR)
(72) Erfinder: Hellstern, Günter, 76137 Karlsruhe (DE)
(74) Vertreter: Knecht, Ulrich Karl, Dipl.-Ing.

(57) **Zusammenfassung**

Es ist bekannt, in einem zellularen Mobilfunknetz (CN) einen Testsender (TS) einzubringen, der ein Testsignal zum Empfang durch Mobilstationen sendet, die sich in dem Versorgungsbereich des Mobilfunknetzes befinden.

Es wird ein einfaches rechnergestütztes Verfahren zum Testen des Mobilfunknetzes vorgeschlagen, bei dem der Testsender (TS) das Testsignal auf einem Träger (f1) sendet, der bereits einer Funkfeststation (BTS) des Mobilfunknetzes (CN) zum Senden ihrer Rundspruchsignale zugewiesen ist. Damit kann eine jede Mobilstation das Testsignal einfach empfangen. Der Empfangspegel wird für eine Auswertung in einem Rechner an diejenige Funkfeststation übertragen, in deren Versorgungsbereich sich die Mobilstation befindet. Der Rechner verwendet einen Entscheidungsprozeß für das Weiterreichen von Mobilstationen, um den Empfangspegels des Testsignales und der Empfangspegel der Rundspruchsignale auszuwerten. Dann prüft der Rechner, ob der Teststandort des Testsenders (TS) geeignet ist, um dort eine neue Funkfeststation zur Bereitstellung zusätzlicher Funkresourcen in dem Mobilfunknetz zu installieren.

## Beschreibung

Die Erfindung betrifft einen Testsender für ein zellulares Mobilfunknetz nach dem Oberbegriff des Patentanspruchs 1. Außerdem betrifft die Erfindung ein Verfahren und einen Rechner zum Testen eines zellularen Mobilfunknetzes nach dem Oberbegriff eines der nebengeordneten Patentansprüche.

Aus der Produktinformation "Digital Cellular Traffic Hotspot Detector" von der Firma Motorola, Swindon, Großbritannien, ist ein Testsender für ein zellulares Mobilfunknetz, nämlich für das nach dem GSM-Standard (GSM: Global System for Mobile Communications) ausgelegte Mobilfunknetz, bekannt. Dieser Testsender sendet ein sogenanntes "Dummy BCCH Signal", d. h. ein Testsignal zum Empfang durch Mobilstationen, die sich in dem Versorgungsbereich des Mobilfunknetzes befinden. In dem dort beschriebenen rechnergestützten Verfahren "Hotspot Detection" wird der Testsender in den Versorgungsbereich des Mobilfunknetzes an einem Teststandort aufgestellt, dann wird mittels des Testsenders ein Testsignal gesendet und anschließend wird das Testsignal von den Mobilstationen empfangen, die sich in dem Versorgungsbereich des Mobilfunknetzes befinden. Eine jede der Mobilstation, die das Testsignal empfängt, mißt und berichtet den Empfangspegel dieses Testsignals an die aktuelle Funkfeststation ("base station currently serving the cell"). In einem mit dieser Funkfeststation verbundenen Rechner werden die von mehreren Mobilstationen berichteten Empfangspegel ausgewertet, um festzustellen, ob der Teststandort für die Einrichtung einer Funkfeststation geeignet ist. Wie dort beschrieben, wird der Teststandort dann als geeignet befunden, wenn die Mehrheit der Mobilstationen das Testsignal stärker empfängt als das Rundspruchsignal, das die aktuelle Funkfeststation sendet. Das dortige Testsignal ist nicht in der sogenannten Nachbarliste (neighbourlist) des zellularen Mobilfunknetzes eingetragen, um zu vermeiden, daß die Mobilstationen das Testsignal als ein für das Mobilfunknetz typisches Rundspruchsignal erkennen und einen sogenannten Handover auf dieses Testsignal versuchen. Demnach wird das Testsignal willkürlich auf einem fremden Träger gesendet, um zu vermeiden, daß die Mobilstationen von der aktuellen Funkfeststation zu dem Testsender weitergereicht werden. Um das Testsignal auf diesem Träger empfangen zu können, muß eine Mobilstation diesen Träger jedoch kennen und seinen Empfänger auf diesen Träger aufschalten.

Aufgabe der Erfindung ist es, den eingangs genannten Testsender und das entsprechende Verfahren für den Empfang des Testsignales durch die Mobilstationen zu verbessern. Außerdem soll ein Rechner vorgeschlagen werden, mit Hilfe dessen das Verfahren einfach ausführbar ist.

Gelöst wird die Aufgabe durch einen Testsender mit Merkmalen nach Anspruch 1 sowie durch ein Verfahren und durch einen Rechner mit den Merkmalen nach den nebengeordneten Ansprüchen.

Demnach sendet der Testsender das Testsignal auf einem Träger, der bereits einer Funkfeststation des Mobilfunknetzes zum Senden von Rundspruchsignale an die Mobilstationen zugewiesen ist. Dadurch wird zum Senden des Testsignales ein Träger verwendet, der im Mobilfunknetz bereits registriert ist. Die Mobilstationen, die in der Regel zum Empfang der Rundspruchsignale bereit sind, kennen diesen Träger und können nun auch dieses Testsignal einfach, d.h. ohne Umschalten auf einen anderen Träger, empfangen.

Vorteilhafte Ausgestaltung der Erfindung sind den Unteransprüchen zu entnehmen.

Vorzugsweise ist in einem zellularen Mobilfunknetz, in dem verschiedene Trägerfrequenzen verwendet werden, dieser Träger die Trägerfrequenz, die bereits eine der Funkfeststationen zum Senden ihrer Rundspruchsignale verwendet, wobei die Rundspruchsignale am Teststandort des Testsenders möglichst schwach empfangen werden. Besonders vorteilhaft ist es, als Träger diejenige Trägerfrequenz zu wählen, auf der momentan kein Rundspruchsignal ausgesendet wird.

Im folgenden wird die Erfindung anhand eines Ausführungsbeispieles und unter Zuhilfenahme der folgenden Figuren näher beschrieben:
- Fig. 1a,: die schematisch den Aufbau eines zellularen Mobilfunknetzes zeigt,
- Fig. 1b,: die einen Ausschnitt der Fig 1a zeigt,
- Fig. 2,: die schematisch das Format des Testsignales zeigt, und
- Fig. 3a u. 3b,: die das Ablaufdiagramm eines Verfahrens zum Testen des zellularen Mobilfunknetzes darstellen.

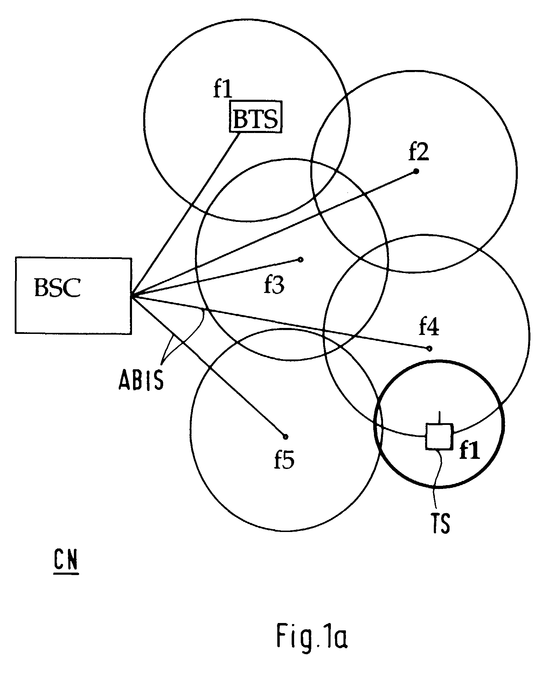

In Fig. 1a ist schematisch der Aufbau eines zellularen Mobilfunknetzes CN gezeigt. Das Mobilfunknetz CN enthält eine Basisstationssteuerung BSC, die mit Funkfeststationen über Verbindungen ABIS verbunden ist. Die Funkfeststationen versorgen jeweils eine Funkzelle, wobei zueinander benachbarte Funkfeststationen auf verschiedenen Trägerfrequenzen f1 bis f5 Funksignale senden und empfangen. In Fig. 1a ist eine Gruppe von fünf zueinander benachbarten Funkfeststationen dargestellt, die auf den Trägerfrequenzen f1 bis f5 Rundspruchsignale an Mobilfunkstationen senden, die sich in den Funkzellen aufhalten. Diese Gruppe von Funkfeststationen bildet ein sogenanntes Cluster, d. h. einen Teil des Versorgungsbereiches des Mobilfunknetzes, in dem jede der Trägerfrequenzen f1 bis f5 nur einmal verwendet wird. Eine solche Gruppe wird im folgenden auch Funkzellengruppe genannt. Wie in Fig. 1a dargestellt, befindet sich in dem Versorgungsbereich des Mobilfunknetzes CN ein Testsender TS, der an einem Teststandort aufgestellt ist. Der Testsender TS sendet ein Testsignal an die Mobilstationen auf einem Träger f1, der einer der Trägerfrequenzen f1 bis f5 entspricht. Als Träger für das Testsignal wird hier die Trägerfrequenz f1 gewählt, der bereits derjenigen Funkfeststation BTS zum Senden ihrer Rundspruchsignale zugewiesen ist. Um Interferenzen zwischen dem Testsender TS und dieser Funkfeststation BTS zu vermeiden, wird das Testsignal nur dann gesendet, wenn diese Funkfeststation BTS ihre Rundspruchsignale nicht sendet. Außerdem ist es vorteilhaft, wenn die Teststation TS einen großen räumlichen Abstand innerhalb der Funkzellengruppe zu dieser Funkfeststation BTS hat.

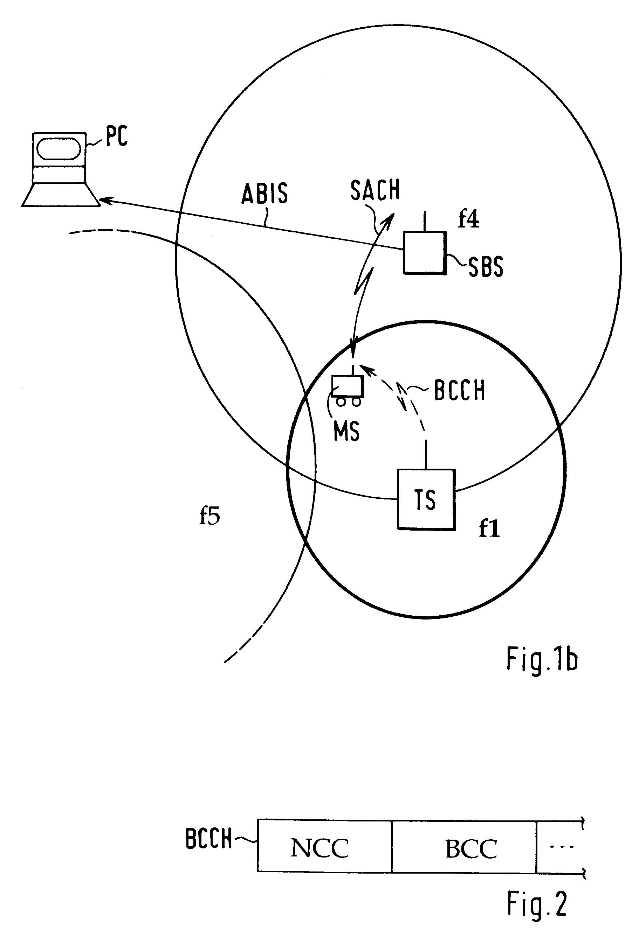

In Fig. 1b ist ein Ausschnitt des zellularen Mobilfunknetzes gezeigt, der die Funkzellen mit der Trägerfrequenz f4 und f5 sowie den Teststandort des Testsenders TS umfaßt. Exemplarisch für eine Anzahl von N Mobilstationen ist in Fig. 1b nur eine Mobilstation MS dargestellt. Es wird im folgenden das Aussenden des Testsignales BCCH an diese Mobilstation MS, der Empfang des Testsignales und die Übertragung zur Auswertung an einen Rechner PC beschrieben:

Die Mobilstation MS befindet sich im Versorgungsbereich ihrer Funkzelle, d.h. im Funkfeldbereich ihrer aktuellen Funkfeststation SBS, im weiteren auch Serving Base Station genannt. Außerdem wird die Mobilstation MS vom Funkfeldbereich des Testsenders TS erfaßt. Der Testsender sendet auf der Trägerfrequenz f1 das Testsignal BCCH. Die Mobilstation MS, die zum Empfang von Rundspruchsignalen in dem Mobilfunknetz bereit ist, überwacht fortlaufend die im Mobilfunknetz verwendeten Trägerfrequenzen f1 bis f5. Dadurch empfängt die Mobilstation MS auch das Testsignal BCCH gleichwie die Rundspruchsignale der umliegenden Funkfeststationen. Die Mobilstation kann das Testsignal BCCH automatisch empfangen, ohne daß Maßnahmen in der Mobilstation MS durchgeführt werden müssen.

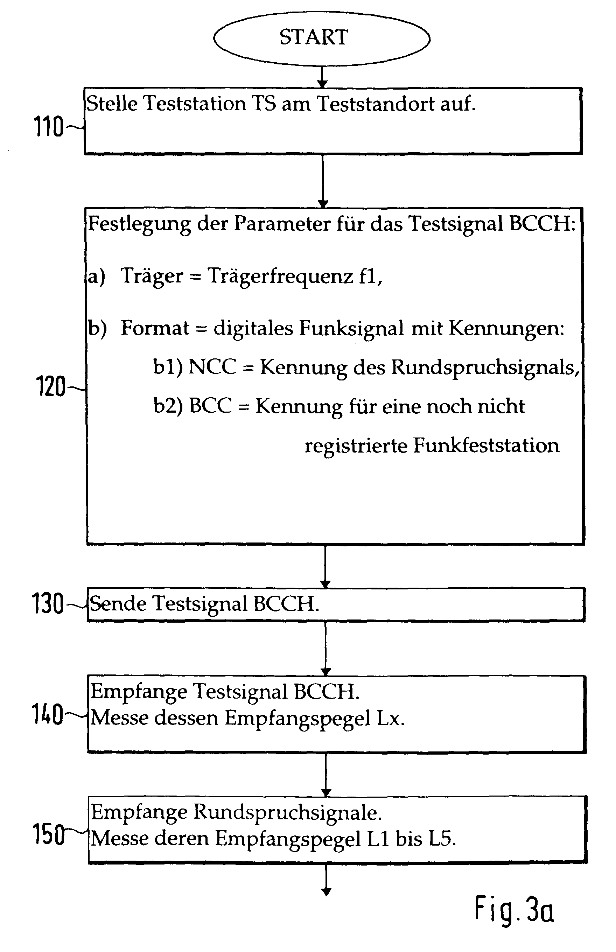

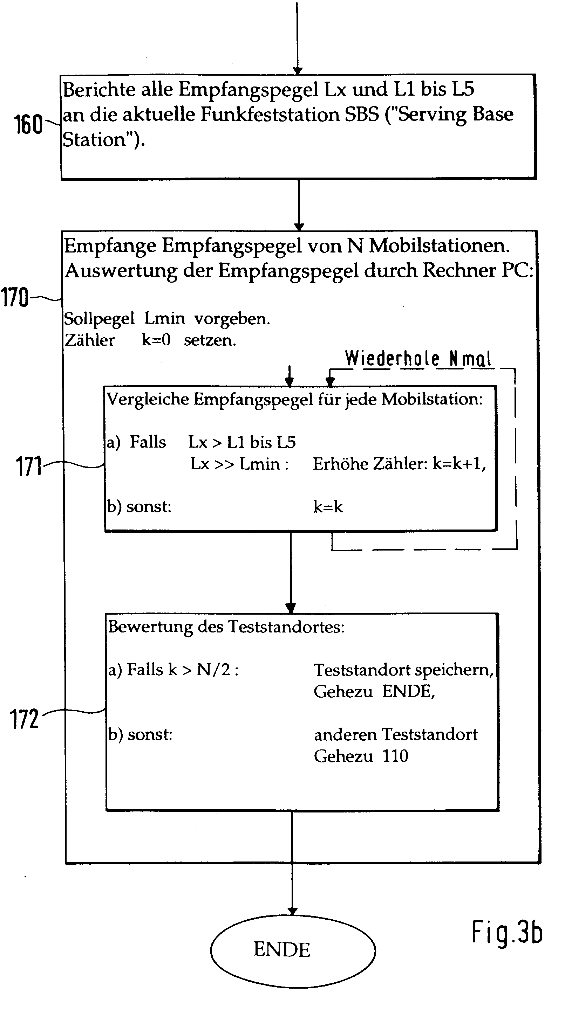

Die Mobilstation MS empfängt das Testsignal sowie die Rundspruchsignale von den umliegenden Funkfeststationen und mißt alle Empfangspegel , um sie an die aktuelle Funkfeststation SBS zur Auswertung durch den Rechner PC zu übertragen. Die Übertragung der Empfangspegel erfolgt über die Luftschnittstelle in einem Steuerungsdatenkanal SACH und anschließend über die Verbindung ABIS zum Rechner PC. Der Rechner ist hier eine mit der in Fig. 1a dargestellten Funkfeststationssteuerung verbundene Workstation. Das Verfahren zum Testen mittels des Testsignals BCCH wird nachfolgend anhand der Fig. 2 und 3 näher beschrieben:

In Fig. 2 ist schematisch das Format des Testsignales BCCH dargestellt. Das Testsignal ist in diesem Beispiel ein digitales Funksignal mit einer ersten Kennung NCC und mit einer zweiten Kennung BCC. Die erste Kennung NCC entspricht einer Kennung, die für alle in dem Mobilfunknetz ausgesendeten Rundspruchsignale vorgegeben ist. Damit wird das Testsignal BCCH von der Mobilstation als ein in dem gesendetes Mobilfunknetz typisches Rundspruchsignal erkannt. In diesem Beispiel ist das Mobilfunknetz nach dem GSM-Standard ausgelegt und die erste Kennung entspricht hier dem sogenannten Network Colour Code. Die zweite Kennung BCC entspricht einer Kennung, die noch nicht für eine im Mobilfunknetz vorhandene Funkfeststation vergeben worden ist. Damit erhält das Testsignal BCCH den Charakter eines Rundspruchsignales, das von einer "unbekannten" Funkfeststation auszugehen scheint. Aufgrund der ersten Kennung NCC erkennt die Mobilstation beim Empfang des Testsignales BCCH dieses Testsignal als ein für das Mobilfunknetz typisches Rundspruchsignal, dessen Empfangspegel gemessen werden soll. Die zweite Kennung BCC dient dazu, dem Rechner PC anzuzeigen, daß dieser Empfangspegel nicht zu einem "normalen" Rundspruchsignal gehört, das eine in dem Mobilfunknetz registrierte Funkfeststationen aussendet. Anhand der zweiten Kennung BCC erkennt der Rechner PC vielmehr, daß der Empfangspegel des Testsignales zu einer fremden Funkfeststation, nämlich zu dem Testsender TS, gehört. Dieser Empfangspegel kann dann im Rechner PC mit den Empfangspegeln verglichen werden, die "normalen" Rundspruchsignale der Funkfeststationen zuzuordnen sind. Anhand der Fig. 3a und 3b wird nun das Verfahren 100 zum Testen des mobilfunknetzes genau beschrieben:

Wie in Fig. 3a dargestellt, wird in einem ersten Schritt 110 die Teststation TS an einem Teststandort innerhalb des Versorgungsbereiches des Mobilfunknetzes aufgestellt. In einem zweiten Schritt 120 werden die Parameter für das zu sendende Testsignal BCCH wie folgt festgelegt: a) der Träger für das Testsignal soll der Trägerfrequenz f1 entsprechen. b) das Format des Testsignales soll dem eines digitalen Funksignales entsprechen mit den Kennungen NCC und BCC.

In einem weiteren Schritt 130 wird nun das Testsignal BCCH von der Teststation TS ausgesendet. Nachfolgend wird in einem Schritt 140 das Testsignal von einer Mobilstation empfangen und der Empfangspegel Lx wird gemessen. In einem weiteren Schritt 150 empfängt die Mobilstation ebenfalls Rundspruchsignale der anderen Funkfeststationen und mißt deren Empfangspegel L1 bis L5. Die Mobilstation berichtet in einem nächsten Schritt 160 alle gemessenen Empfangspegel LX und L1 bis L5 an die aktuelle Funkfeststation SBS. Dazu werden die Empfangspegel per Funk über den Steuerungskanal SACH an die Funkstation SBS übertragen und von dort über die Verbindung ABIS an den Rechner PC weitergeleitet. In einem nächsten Schritt 170 wertet der Rechner die Empfangspegel aus, indem er a) den Empfangspegel LX mit den anderen Empfangspegeln L1 bis L5 vergleicht und b) den Teststandort bewertet.

Zur Bewertung des Teststandortes wird eine Schrittfolge 170 mit den Teilschritten 171 und 172 durchlaufen. Diese Schrittfolge entspricht einer Rechenprozedur, dessen eigentlicher Verwendungszweck es ist, das Weiterreichen von Mobilstationen durch die Funkstationssteuerungen und Mobilfunkvermittlungsstellen des Mobilfunknetzes zu steuern. Diese Rechenprozedur, die hier auch kurz Entscheidungsprozeß für das Weiterreichen genannt wird, wird hier zur Bewertung des Teststandortes verwendet. Dabei werden für jede der N Mobilstationen die Empfangspegel Lx und L1 bis L5 als Eingangsdaten für den Entscheidungsprozeß verwendet.

In dem ersten Teilschritt 171 werden diese sechs Empfangspegel Lx und L1 bis L5 mit einem vorgebbaren Sollpegel Lmin verglichen. Ist der Empfangspegel Lx des Testsignales größer als die anderen Empfangspegel L1 bis L5 und auch wesentlich größer als der Sollpegel Lmin, dann wird in einem Teilschritt 172 ein Zähler k um Eins erhöht: k=k+1. Die Erhöhung des Zählers k bedeutet, daß diese Mobilstation das Testsignal als bestes Signal empfangen hat.Der Teilschritt 171 wird für die nächste der N Mobilstationen wiederholt, d.h. so lange bis N mal sechs Empfangspegel ausgewertet sind.

Dann wird in dem Teilschritt 172 geprüft, ob der Zähler k größer ist als die halbe Anzahl aller N Mobilstationen. Demnach wird geprüft, ob die Mehrheit der Mobilstationen (k >N/2) das Testsignal so gut empfängt, daß diese k Mobilstationen auf die vermeintliche Funkfeststation, nämlich auf die Teststation, weitergereicht werden sollen. Ist dies der Fall, so gilt der Teststandort als geeignet für die Einrichtung einer 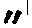 normalen*"* Funkfeststation. Der Teststandort wird in einem Speicher abgelegt. Danach wird das Verfahren beendet. Falls nicht die Mehrheit der N Mobilstationen weitergereicht werden sollen, wird in anderer Teststandort gewählt und der Berwertung unterzogen. Das Verfahren wird dann ab Schritt 110 wiederholt.

Wie aus der obigen Beschreibung hevorgeht, wird ein Entscheidungsprozeß zum Weiterreichen, eine sogenannte 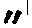 Handoff-Prozedur*"* verwendet, um den Teststandort des Testsenders zu bewerten. Die Verwendung einer solchen Prozedur hat den Zweck, die Güte des Teststandortes anhand der sogenannten 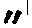 Handoff-Kriterien*"* zu bestimmen, um eine möglichst realistische Bewertung zu erzielen. Damit wird ein Teststandort dann gegenüber anderen bevorzugt, wenn möglichst viele Mobilstationen dort eine normale Funkfeststation 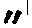 wünschen*".* Da in einer 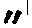 Handoff-Prozedur*"* in der Regel viele Entscheidungsparameter berücksichtigt werden können, wie etwa die Stabilität der Empfangspegel innerhalb eines vorgebbaren Zeitintervalls, kann die Bewertung des Teststandortes sehr leicht verfeinert werden. Darüberhinaus erspart die Verwendung einer vorhandenen 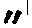 Handoff-Prozedur*"* Kosten für eine Heuentwicklung eines Softwaretools für die Bewertung des Teststandortes.

In dem obigen Beispiel wurde der Testsender und das Verfahren beschrieben anhand eines zellularen Mobilfunknetzes, in dem verschiedene Trägerfrequenzen verwendet werden. Der Träger für das Testsignal entspricht in diesem Beispiel einer bestimmten Trägerfrequenz. Der Träger kann auch eine TDMA-Zeitlage sein (TDMA: Time Division Multiple Access). Es ist auch denkbar in einem sogenannten CDMA-Mobilfunknetz (Code Division Multiple Access), in dem verschiedene Spreizcodes gewählt werden, als Träger für das Testsignal einen bestimmten Spreizcode zu verwenden. In dem obigen Beispiel wurde zur Auswertung der Empfangspegel des Testsignales gemessen und mit anderen Empfangspegeln verglichen. Es ist auch denkbar, andere Kenngrößen des Testsignales auszuwerten und zu vergleichen, zum Beispiel die Fehlerrate (sogenannte bit error rate).

## Patentansprüche

1. Testsender (TS) für ein zellulares Mobilfunknetz (CN), der ein Testsignal (BCCH) sendet zum Empfang durch Mobilstationen (MS), die sich in dem Versorgungsbereich des Mobilfunknetzes (CN) befinden,
**dadurch gekennzeichnet, daß**
der Testsender (TS) das Testsignal (BCCH) auf einem Träger (f1) sendet, der bereits einer Funkfeststation (BTS) des Mobilfunknetzes (CN) zum Senden von Rundspruchsignalen an die Mobilstationen (MS) zugewiesen ist.

2. Testsender (TS) nach Anspruch 1, dadurch gekennzeichnet, daß der Versorgungsbereich des zellularen Mobilfunknetzes (CN) Funkzellen mit verschiedenen Trägerfrequenzen umfaßt und daß der Träger, auf dem der Testsender (TS) das Testsignal (BCCH) sendet, eine Trägerfrequenz (f1) ist, die dieser Funkfeststation (BTS) zum Senden der Rundspruchsignale zugewiesen ist.

3. Testsender nach Anspruch 1, dadurch gekennzeichnet, daß das zellulare Mobilfunknetz ein digitales Mobilfunknetz ist, dessen Versorgungsbereich Funkzellen mit verschiedenen Spreizcodes umfaßt und daß der Träger, auf dem der Testsender das Testsignal sendet, ein Spreizcode ist, der dieser Funkfeststation zum Senden der Rundspruchsignale zugewiesen ist.

4. Testsender (TS) nach Anspruch 1, dadurch gekennzeichnet, daß der Versorgungsbereich des zellularen Mobilfunknetz (CN) in Funkzellengruppen unterteilt ist, daß der Testsender (TS) innerhalb einer der Funkzellengruppen von einem Teststandort aus das Testsignal (BCCH) auf dem Träger (f1) sendet, der derjenigen Funkfeststation (BTS) innerhalb der Funkzellengruppe zugewiesen ist, deren Rundspruchsignale an diesem Teststandort einen geringen Empfangspegel (L1) haben.

5. Testsender (TS) nach Anspruch 4, dadurch gekennzeichnet, daß der Testsender (TS) das Testsignal (BCCH) auf dem Träger (f1) sendet, der derjenigen Funkfeststation (BTS) zugewiesen ist, zu der die Teststation (TS) innerhalb dieser Funkzellengruppe den größten räumlichen Abstand hat.

6. Testsender (TS) nach Anspruch 4, dadurch gekennzeichnet, daß der Testsender (TS) das Testsignal (BCCH) auf dem Träger (f1) sendet, der derjenigen Funkfeststation (BTS) zugewiesen ist, die ihre Rundspruchsignale während des Sendens des Testsignales nicht aussendet.

7. Testsender (TS) nach Anspruch 1, dadurch gekennzeichnet, daß die Rundspruchsignale digitale Funksignale mit einem vorgebbaren Format sind und daß das von dem Testsender (TS) ausgesendete Testsignal (BCCH) ein digitales Funksignal mit diesem Format ist.

8. Testsender (TS) nach Anspruch 7, dadurch gekennzeichnet, daß das Testsignal (BCCH) eine erste Kennung (NCC) enthält, die einer Kennung für die in dem Mobilfunknetz (CN) ausgesendeten Rundspruchsignale entspricht, und daß das Testsignal (BCCH) eine zweite Kennung (BCC) enthält, die einer Kennung für eine noch nicht in dem Mobilfunknetz (CN) registrierte Funkfeststation entspricht.

9. Verfahren (100) zum Testen eines zellularen Mobilfunknetzes (CN),
- bei dem ein Testsender (TS) innerhalb des Versorgungsbereich des Mobilfunknetzes an einem Teststandort aufgestellt wird (Schritt 110),
- bei dem mittels des Testsenders (TS) ein Testsignal (BCCH) gesendet wird (Schritt 130), um von Mobilstationen (MS), die sich in dem Versorgungsbereich befindet, empfangen zu werden (Schritt 140),
**dadurch gekennzeichnet, daß**
- zum Senden des Testsignals (BCCH) ein Träger (f1) verwendet wird, der bereits einer Funkfeststation (BTS) des Mobilfunknetzes (CN) zum Senden von Rundspruchsignalen an die Mobilstationen (MS) zugewiesen ist.

10. Verfahren (100) nach Anspruch 9, dadurch gekennzeichnet, daß
- von den Mobilstationen (MS) der Empfangspegel (Lx) des Testsignales (BCCH) gemessen wird (Schritt 140),
- daß von den Mobilstationen (MS) die Rundspruchsignale der Funkfeststationen empfangen und deren Empfangspegel (L1 bis L5) gemessen werden (Schritt 150), und
- daß alle gemessenen Empfangspegel (Lx, L1 bis L5) von den Mobilstationen (MS) an die aktuelle Funkfeststation (SBS) übertragen werden (Schritt 160), um in einem Rechner (PC) ausgewertet zu werden (Schritt 170).

11. Verfahren (100) nach Anspruch 10, dadurch gekennzeichnet, daß
- mittels des Rechners (PC) die Empfangspegel (Lx) des Testsignals mit den anderen Empfangspegeln (L1 bis L5) verglichen werden, und
- daß der Teststandort geändert wird, falls der Empfangspegel (Lx) des Testsignals kleiner als die anderen Empfangspegel (L1 bis L5) ist.

12. Verfahren (100) nach Anspruch 10, dadurch gekennzeichnet, daß
- mittels des Rechners (PC) die Empfangspegel (Lx) des Testsignals und die anderen Empfangspegeln (L1 bis L5) ausgewertet werden, indem sie als Eingangsdaten für einen Entscheidungsprozeß für das Weiterreichen von Mobilstationen verwendet werden, um festzustellen, ob die Mehrheit der Mobilstationen (MS) von ihrer aktuellen Funkfeststation (BTS) zu dem Testsender (TS) weitergereicht werden sollen, und
- daß Teststandort geändert wird, falls die Mehrheit der Mobilstationen (MS) weitergereicht werden soll.

13. Verfahren (100) nach Anspruch 12, dadurch gekennzeichnet, daß
- als zusätzliche Eingangsdaten für den Entscheidungsprozeß für das Weiterreichen die Längen der Zeitintervalle verwendet werden, die angeben, wie lange ein jeder der Eingangspegel (Lx, L1 bis L5) einen vorgebbaren Sollpegel (Lmin) nicht unterschreitet.

14. Rechner (PC) zum Testen eines zellularen Mobilfunknetzes (CN), der die Empfangspegel (Lx) eines Testsignals und die anderen Empfangspegel (L1 bis L5) von Rundspruchsignalen auswertet, um den Teststandort eines Testsenders (TS), der das Testsignal sendet, zu bewerten,
**dadurch gekennzeichnet, daß**
der Rechners (PC) die Empfangspegel (Lx) des Testsignals und die anderen Empfangspegeln (L1 bis L5) ausgewertet, indem der Rechner sie als Eingangsdaten verwendet für einen Entscheidungsprozeß für das Weiterreichen von Mobilstationen, und indem der Rechner prüft, ob die Mehrheit der Mobilstationen (MS) von ihrer aktuellen Funkfeststation (BTS) zu dem Testsender (TS) weitergereicht werden sollen, und dann anzeigt, daß Teststandort zu ändern ist, falls die Mehrheit der Mobilstationen (MS) weitergereicht werden soll.
